# DEMANDE DE BREVET EUROPEEN

(11) **EP 3 996 342 A1**
(43) Date de publication de la demande: **11.05.2022**
(21) Numéro de dépôt: 20306353.2
(22) Date de dépôt: 09.11.2020
(51) Int. Cl.: H04L 29/06

(54) **PROCEDE ET SYSTEME D'ACCES A UNE APPLICATION DISTANTE**

(71) Demandeur: Bull SAS, 78340 Les Clayes-sous-Bois (FR)
(72) Inventeur: DEMEILLIEZ, Bruno, 38380 Saint Laurent du Pont (FR)
(74) Mandataire: IPAZ

(57) **Abrégé**

L'invention concerne un procédé (100) d'accès d'un utilisateur, avec un appareil utilisateur, à une application distante, exécutée sur un appareil serveur, distant dudit appareil utilisateur et accessible au travers d'un réseau de communication, ledit procédé (100) comprenant au moins une itération d'une étape (104) de connexion comprenant les étapes suivantes :
▪ émission (106), par ledit appareil utilisateur, d'une requête d'accès à ladite application distante ;
▪ réception de ladite requête d'accès par une unité d'authentification, disposée entre ledit appareil utilisateur et ledit appareil ;
▪ identification, par ladite unité d'authentification, d'au moins une donnée d'authentification préalablement mémorisée au niveau de ladite unité d'authentification ; et
▪ authentification dudit utilisateur auprès de l'appareil serveur avec ladite au moins une donnée d'authentification.

Elle concerne également un système configuré pour mettre en œuvre un tel procédé.

## Description

La présente invention concerne un procédé d'accès à une application distante, également appelé application en ligne, et en particulier à une application web accessible via un navigateur Internet. Elle concerne également un système mettant en œuvre un tel procédé.

Le domaine de l'invention est le domaine de la gestion d'accès à des applications distantes, ou en ligne, c'est-à-dire des applications hébergées et exécutées sur un appareil serveur distant de l'appareil utilisateur, et accessible au travers d'un réseau de type Internet, et en particulier les applications web.

### État de la technique

Pour accéder à une application distante, ou en ligne, chaque utilisateur dispose de données d'identification comprenant généralement un identifiant et un mot passe. Les règles de bonnes conduites en matière de sécurité demandent à ce que ces données d'identification, et plus particulièrement le mot de passe, soient différents pour chaque application.

Lorsque l'accès à une application est réalisée au travers de navigateurs Internet tels Firefox, IE, Chrome, certains navigateurs proposent à l'utilisateur une fonctionnalité lui permettant de sauvegarder ses identifiants au niveau du navigateur. Cette fonctionnalité permet de respecter les règles de bonnes conduites sans devoir mémoriser les différents identifiants pour chaque application. Si la mémorisation des identifiants se fait de façon aisée sur un navigateur donné, il faut répéter cette opération sur chaque navigateur si l'utilisateur souhaite pouvoir utiliser différents navigateurs sur un même poste de travail, ce qui peut être long et fastidieux. Cette opération est à répéter également lorsque l'utilisateur souhaite utiliser plusieurs postes différents, ces postes pouvant également être de nature différente, tel qu'un ordinateur, une tablette, un téléphone, etc., ce qui peut être long et fastidieux également.

Tout cela conduit souvent les utilisateurs à n'utiliser finalement qu'un seul et même identifiant, et particulièrement un même mot de passe, quel que soit l'application et ainsi à compromettre la sécurité des accès aux différentes applications.

Un but de la présente invention est de remédier à ces inconvénients.

Un autre but de la présente invention est de proposer une solution permettant de faciliter l'accès à des applications distantes, en particulier des applications web accédées au travers d'un navigateur Internet.

Un autre but de la présente invention est de proposer une solution permettant de faciliter l'accès à des applications distantes, sans compromettre la sécurité des accès.

Un autre but de la présente invention est de proposer une solution permettant d'accès à des applications distantes de manière simple, rapide et ergonomique.

### Exposé de l'invention

L'invention permet d'atteindre au moins l'un de ces buts par un procédé d'accès d'un utilisateur, avec un appareil utilisateur, à une application, dite distante, exécutée sur un appareil, dit appareil serveur, distant dudit appareil utilisateur et accessible au travers d'un réseau de communication, en particulier de type Internet, ledit procédé comprenant au moins une itération d'une étape de connexion comprenant les étapes suivantes :
▪ émission, par ledit appareil utilisateur, d'une requête d'accès à ladite application distante ;
▪ réception de ladite requête d'accès par une unité, dite d'authentification, disposée entre ledit appareil utilisateur et ledit appareil serveur ;
▪ identification, par ladite unité d'authentification, d'au moins une donnée d'authentification préalablement mémorisée au niveau de ladite unité d'authentification ; et
▪ authentification dudit utilisateur auprès de l'appareil serveur avec ladite au moins une donnée d'authentification.

Ainsi, l'invention propose de mémoriser la ou les données d'authentification d'un utilisateur, et en particulier son mot de passe, pour accéder à une application exécutée par un appareil distant, non pas au niveau de l'appareil utilisateur, mais au niveau d'une unité d'authentification, ou d'un emplacement accessible à ladite unité d'authentification, disposée entre l'appareil utilisateur et ledit appareil serveur. Ainsi, quel que soit l'appareil utilisateur, et quel que soit le navigateur Internet utilisé, l'invention permet de réaliser une authentification de l'utilisateur auprès de l'appareil serveur exécutant l'application, sans que l'utilisateur n'ait à saisir ses données d'authentification, et en particulier son mot de passe lorsqu'il change de navigateur ou d'appareil utilisateur.

Autrement dit, grâce à la présente invention, l'utilisateur n'a pas à saisir ses données d'authentification, et en particulier son mot de passe, lorsqu'il change d'ordinateur ou de navigateur.

Ainsi, l'invention permet de faciliter l'accès à des applications distantes, en particulier via à des navigateurs Internet. L'utilisateur n'ayant plus à saisir ses mots de passe à chaque fois qu'il change d'appareil utilisateur ou de navigateurs Internet, il peut choisir des mots de passe différents pour ses applications, ce qui permet de ne pas compromettre la sécurité des accès, tout en permettant un accès simple, rapide et ergonomique.

Bien entendu, il est possible de mettre en œuvre l'invention individuellement pour plusieurs applications.

Selon l'invention, une application distante est une application exécutée sur un appareil distant de l'appareil utilisateur et accessible à l'appareil distant au travers d'un réseau de communication. En particulier, application distante peut être une application web accessible par un navigateur Internet, ou une application distante exécuté sur un serveur et accessible par un navigateur.

Dans la présente invention, une donnée est mémorisée au niveau de l'unité d'authentification lorsqu'elle est mémorisée dans ladite unité d'authentification, ou en un emplacement accessible à ladite unité d'authentification.

Avantageusement, le procédé selon l'invention peut comprendre, préalablement à la première étape de connexion, une étape, dite de mémorisation, au niveau de l'unité d'authentification, d'au moins une donnée d'authentification en association avec au moins une application distante.

Pour au moins une application, au moins une donnée d'authentification dans l'unité d'authentification peut comprendre :
- au moins un identifiant pour accéder à ladite application distante ; et/ou
- au moins un mot de passe pour accéder à ladite application distante.

Pour au moins une application, au moins un identifiant mémorisé au niveau de l'unité d'authentification peut être, ou peut comprendre, un identifiant de l'utilisateur.

Pour au moins une application, au moins un identifiant mémorisé au niveau de l'unité d'authentification peut être, ou peut comprendre, un identifiant d'au moins un appareil utilisateur. Ainsi, chaque personne pouvant utiliser cet appareil utilisateur peut avoir accès à l'application distante.

Pour au moins une application, au moins un identifiant mémorisé au niveau de l'unité d'authentification peut être, ou peut comprendre, un identifiant d'un profil d'accès. Un profil d'accès peut comprendre plusieurs identifiants utilisateur. Des droits d'accès spécifiques peuvent être définis pour chaque utilisateur. Ainsi, il est possible de partager un accès avec plusieurs utilisateurs avec des droits d'accès spécifiques pour chaque utilisateur.

Préférentiellement, au moins une application peut être une application accessible au travers d'un navigateur Internet. Dans ce cas, la requête d'accès peut être émise par ledit navigateur Internet.

Par exemple, l'utilisateur peut renseigner un identifiant dans le navigateur Internet sur une page d'identification. Cet identifiant peut être inséré dans la requête de sorte qu'il est communiqué à l'unité d'authentification. Cette dernière peut, en utilisant cet identifiant, retrouver le mot de passe préalablement mémorisé au niveau de ladite unité d'authentification. Une fois le mot de passe retrouvé, l'unité d'authentification peut procéder à l'authentification auprès de l'appareil distant par émission d'une requête d'authentification comprenant le mot de passe.

Suivant des modes de réalisation, au moins requête d'accès peut comprendre au moins un identifiant mémorisé au niveau de ladite unité d'authentification, et relatif à l'utilisateur, un profil utilisateur, ou un appareil utilisateur.

En utilisant cet identifiant, l'unité d'authentification peut retrouver un ou des mots de passe, et plus généralement au moins une donnée d'authentification mémorisée au niveau de l'unité d'authentification, pour cet utilisateur, ce profil utilisateur ou cet appareil utilisateur.

De plus, au moins une requête d'accès peut comprendre au moins une donnée d'identification, mémorisée au niveau de ladite unité d'authentification, et relative à l'application distante.

En utilisant cet identifiant, l'unité d'authentification peut retrouver un ou des mots de passe, et plus généralement au moins une donnée d'authentification mémorisée au niveau de l'unité d'authentification pour cette application.

Suivant un mode de réalisation, pour chaque application, les données suivantes peuvent être mémorisées au niveau de l'unité d'authentification en association les unes avec les autres :
- au moins un identifiant relatif à l'application distante ;
- au moins un identifiant relatif à l'utilisateur, c'est-à-dire un identifiant de l'utilisateur, d'un appareil utilisateur ou d'un profil utilisateur ; et
- au moins une donnée d'authentification.

Au moins une donnée d'identification mémorisée au niveau de l'unité d'authentification peut comprendre :
- au moins un mot de passe,
- au moins un jeton d'authentification,
- etc.

Suivant un autre aspect de la présente invention, il est proposé un système d'accès d'un utilisateur à une application, dite distante, exécutée sur un appareil distant, dit appareil serveur, au travers d'un réseau de communication, en particulier de type Internet, ledit système comprenant :
- au moins un appareil utilisateur pour accéder à ladite application ;
- au moins un appareil, dit appareil serveur, exécutant ladite application, distant dudit appareil utilisateur, et en communication avec ledit appareil utilisateur au travers dudit réseau de communication ;
- au moins une unité, dite d'authentification, disposée entre ledit appareil utilisateur et ledit appareil serveur ;
configurés pour mettre en œuvre toutes les étapes du procédé selon l'invention.

L'unité d'authentification peut être configurée pour mettre en œuvre toutes les fonctions décrites plus haut en référence à ladite unité d'authentification.

En particulier, l'unité d'authentification peut être configurée pour réaliser les étapes suivantes :
- réception d'une requête d'accès à l'application distante, émise par ledit appareil utilisateur ;
- identification d'au moins une donnée d'identification préalablement mémorisée pour ledit accès au niveau de ladite unité d'authentification ; et
- authentification dudit utilisateur auprès de l'appareil serveur pour obtenir l'accès à ladite application.

Suivant un mode de réalisation, l'unité d'authentification peut comprendre au moins une application logicielle exécutée sur un appareil dédié. Dans ce cas, ledit appareil dédié ne réalise pas d'autres fonctions que celle d'unité d'authentification.

Alternativement, l'unité d'authentification peut comprendre au moins une application logicielle exécutée sur un appareil réalisant au moins une autre fonction. Par exemple, un tel appareil peut être un point d'accès à Internet pour l'appareil utilisateur. Ainsi, l'unité d'accès peut être utilisée pour tous les appareils utilisateurs accédant à Internet au travers dudit point d'accès.

Suivant des modes de réalisation, l'unité d'authentification peut comprendre, ou consister en, un module proxy prévu pour analyser chaque requête d'accès reçue et déterminer si au moins une donnée d'authentification peut être utilisée pour ladite requête.

L'unité d'authentification peut en outre comprendre au moins un des modules suivants :
- un module, dit d'administration, des utilisateurs permettant de créer, modifier et supprimer au moins un utilisateur ;.
- un module, dit de gestion, d'un compte utilisateur permettant à au moins un utilisateur d'administrer manuellement ses données authentifications, et éventuellement un profil utilisateur ;.
- un module de mémorisation permettant d'assurer la persistance de l'ensemble des informations gérées par l'unité d'authentification ;
- un module, dit de connexion, permettant à au moins un utilisateur de s'authentifier sur ladite unité d'authentification.

Suivant encore un autre aspect de la présente invention, il est proposé un dispositif d'authentification pour l'accès d'un utilisateur, avec un appareil utilisateur, à une application, dite distante, exécutée sur un appareil, dit appareil serveur, distant dudit appareil utilisateur et accessible au travers d'un réseau de communication, en particulier de type Internet, ledit dispositif d'authentification étant prévu pour être disposé entre ledit appareil utilisateur et ledit appareil serveur, et configuré pour réaliser les étapes suivantes :
- réception d'une requête d'accès à ladite application émise par ledit appareil utilisateur ;
- identification d'au moins une donnée d'authentification préalablement mémorisée pour ledit accès ; et
- authentification dudit utilisateur auprès de l'appareil serveur pour obtenir l'accès à ladite application.

Le dispositif peut être configuré pour réaliser en outre une combinaison quelconque des fonctions décrites plus haut en relation avec l'unité d'authentification et qui ne sont pas reprises ici par soucis de concision.

Le dispositif selon l'invention peut être un appareil dédié.

Alternativement, le dispositif selon l'invention peut être un dispositif réalisant au moins une autre fonction, tel que par exemple un point d'accès à Internet.

### Description des figures et modes de réalisation

D'autres avantages et caractéristiques apparaîtront à l'examen de la description détaillée d'un mode de réalisation nullement limitatif, et des dessins annexés sur lesquels :
- la FIGURE 1 est une représentation schématique d'un exemple de réalisation non limitatif d'un procédé selon l'invention ;
- la FIGURE 2 est une représentation schématique d'un exemple de réalisation non limitatif d'un système selon l'invention ; et
- la FIGURE 3 est une représentation schématique d'un exemple de réalisation non limitatif d'un dispositif selon l'invention.

Il est bien entendu que les modes de réalisation qui seront décrits dans la suite ne sont nullement limitatifs. On pourra notamment imaginer des variantes de l'invention ne comprenant qu'une sélection de caractéristiques décrites par la suite isolées des autres caractéristiques décrites, si cette sélection de caractéristiques est suffisante pour conférer un avantage technique ou pour différencier l'invention par rapport à de l'état de la technique antérieur. Cette sélection comprend au moins une caractéristique de préférence fonctionnelle sans détails structurels, ou avec seulement une partie des détails structurels si cette partie est uniquement suffisante pour conférer un avantage technique ou pour différencier l'invention par rapport à l'état de la technique antérieure.

Sur les figures les éléments communs à plusieurs figures conservent la même référence.

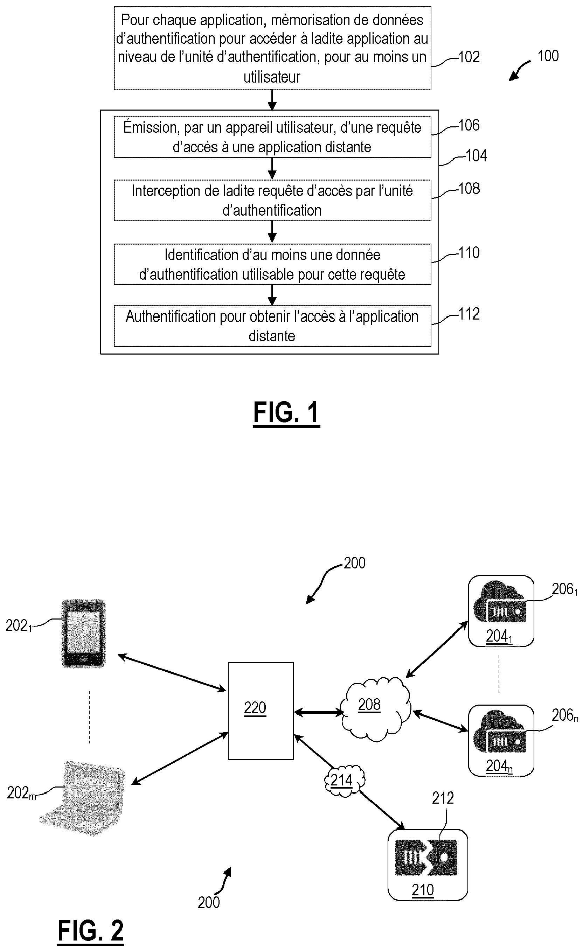

La FIGURE 1 est une représentation schématique d'un exemple de réalisation non limitatif d'un procédé selon l'invention.

Le procédé 100, représenté sur la FGURE 1, peut être utilisé pour la gestion d'accès d'un ou plusieurs utilisateurs à une ou plusieurs applications distantes, et en particulier des applications web, via un ou plusieurs appareils utilisateurs, et en utilisant un ou plusieurs navigateurs Internet.

Pour ce faire, le procédé 100 comprend une étape préliminaire 102 de mémorisation, au niveau d'une unité d'authentification, d'au moins une donnée d'authentification, en particulier d'au moins un mot de passe, pour au moins une application et pour au moins un utilisateur.

Suivant des exemples de réalisation, pour chaque application distante, les données suivantes peuvent être enregistrées en association les unes avec les autres, au niveau de l'unité d'authentification :
- au moins un identifiant relatif à l'application distante : ainsi lors d'une requête d'accès à une application distante, l'unité d'authentification peut identifier l'application concernée. Toutefois, lorsque le procédé 100 est utilisée pour gérer l'accès à une seule application distante, cet identifiant peut être optionnel ;
- au moins un identifiant relatif à l'utilisateur: toutefois, lorsque l'utilisateur utilise toujours le même identifiant, tel que par exemple une adresse mail, cet identifiant peut être optionnel, ; et
- au moins une donnée d'authentification, et en particulier un mot de passe, utilisable pour obtenir l'accès à cette application distante pour cet utilisateur.

Suivant des exemples de réalisation non limitatif, pour chaque application distante, au moins un identifiant relatif à l'utilisateur mémorisé au niveau de l'unité d'authentification peut comprendre, ou consister en :
- un identifiant de l'utilisateur ;
- un identifiant d'au moins un appareil utilisateur. Ainsi, chaque personne pouvant utiliser cet appareil utilisateur peut avoir accès à l'application distante ; et/ou
- un identifiant d'un profil d'accès. Un profil d'accès peut comprendre plusieurs identifiants utilisateur. Des droits d'accès spécifiques peuvent être définis pour chaque utilisateur. Ainsi, il est possible de partager un accès avec plusieurs utilisateurs avec des droits d'accès spécifiques pour chaque utilisateur. Ces droits d'accès peuvent être mémorisés pour chaque utilisateur

Ces données sont mémorisées au niveau de l'unité d'authentification, c'est-à-dire soit dans ladite unité d'authentification, ou dans un emplacement accessible à ladite unité d'authentification

Suite à l'étape 102, le procédé 100 peut comprendre au moins une itération d'une étape 104 de connexion à une application distante exécutée sur un appareil distant, également appelé appareil serveur.

Cette étape de connexion 104 peut être réitérée à chaque fois qu'un utilisateur souhaite se connecter à une application distante, au travers d'un navigateur Internet par exemple.

L'étape de connexion 104 comprend une étape 106 d'émission, par un appareil utilisateur, d'une requête de connexion à l'application distante exécutée par l'appareil serveur. Cette requête peut comprendre :
- un identifiant de l'application distante : cet identifiant peut être saisi ou sélectionné manuellement, par exemple par saisie d'une adresse URL dans un navigateur au sein de l'appareil utilisateur ; et
- un identifiant relatif à l'utilisateur, et en particulier un identifiant de l'utilisateur, de son appareil utilisateur ou d'un profil utilisateur : cet identifiant peut être saisi ou sélectionné manuellement, ou déterminée de manière automatisée par l'appareil utilisateur, ou encore sélectionné automatiquement par le navigateur Internet.

La requête de connexion, émise lors de l'étape 106 par l'appareil utilisateur, est interceptée par l'unité d'authentification, lors d'une étape 108.

Lors d'une étape 110, l'unité d'authentification identifie au moins une donnée d'authentification, et en particulier un mot de passe, pouvant être utilisé pour donner accès à cette application distante pour cet utilisateur.

Cette donnée d'authentification est une donnée mémorisée au niveau de l'unité d'authentification lors de l'étape préliminaire 102. Cette donnée d'authentification est identifiée en utilisant au moins un identifiant éventuellement contenu dans la requête d'accès, tel que décrit plus. Pour ce faire, l'unité d'authentification analyse la requête d'accès interceptée, en extrait au moins un identifiant, et identifie la donnée d'authentification préalablement mémorisée au niveau de l'unité d'authentification en association avec cet identifiant extrait de la requête d'accès.

Lors d'une étape 112, l'unité d'authentification utilise la donnée d'authentification pour obtenir l'accès à l'application distante auprès de l'appareil serveur.

Alternativement, l'unité d'authentification peut communiquer la donnée d'authentification à l'appareil utilisateur, en particulier au navigateur Internet, de sorte que l'identification auprès de l'appareil serveur pour accéder à l'application distante est réalisée par l'appareil utilisateur, et en particulier un navigateur Internet de l'appareil utilisateur.

Ainsi, le procédé selon l'invention permet à un utilisateur d'utiliser l'appareil utilisateur qu'il souhaite, ainsi que le navigateur Internet qu'il souhaite, pour obtenir l'accès à une application distante. Avec le procédé selon l'invention, les données d'authentification étant mémorisées au niveau de l'unité d'authentification, et non pas au niveau de l'appareil utilisateur ni au niveau d'un navigateur Internet, l'utilisateur peut changer à souhait d'appareil utilisateur et de navigateur Internet, sans avoir à saisir ses données d'authentification aux applications distantes à chaque fois.

La FIGURE 2 est une représentation schématique d'un exemple de réalisation non limitatif d'un système selon l'invention.

Le système 200, représenté sur la FIGURE 2, peut être utilisé pour mettre en œuvre un procédé selon l'invention, et en particulier le procédé 100 de la FIGURE 1.

Le système 200 comprend « m » appareils utilisateurs 202₁-202ₘ, avec m≥1, qui sont utilisés par un ou plusieurs utilisateurs pour accéder à des applications distantes, et en particulier à des applications web. Les appareils utilisateurs peuvent être désignés par les référence 202ᵢ ou 202 dans la suite.

Le système 200 comprend « n » appareils distants 204₁-204ₙ, avec n≥1, également appelé appareils serveur, exécutant ou hébergeant des applications web, respectivement 206₁-206ₙ, et accessibles au travers d'un réseau de communication 208 de type Internet. Dans la suite, les appareils serveurs peuvent être désignés par les référence 204ᵢ ou 204, et les applications web peuvent être désignées par les référence 206ᵢ ou 206.

Le système 200 peut en outre comprendre au moins un appareil serveur 210, exécutant ou hébergeant une application distante 212, et accessible sans passer par un réseau de communication de type Internet, par un réseau local 214.

Bien entendu, le système 200 peut comprendre plus d'un appareil serveur exécutant une application distante tel que l'appareil 210.

Le système 200 comprend en outre une unité d'authentification 220 disposée entre les appareils utilisateurs 202₁-202ₘ et les appareils serveur 204₁-204ₙ et 210. Ainsi, une requête d'accès à une application distante 206₁-206ₙ, 212 est interceptée par l'unité d'authentification 220, avant d'être émise vers les appareils serveurs 204₁-204ₙ et 210.

L'unité d'authentification 220 est configurée pour mettre œuvre les fonctionnalités décrites dans la présente demande, en particulier dans le procédé 100 de la FIGURE 1.

En particulier, pour chaque requête d'accès à une application distante 206₁-206ₙ, 212 émise par un appareil utilisateur, l'unité d'authentification 220 est configurée pour :
- intercepter ladite requête d'accès ;
- identifier au moins une donnée d'authentification, et en particulier un mot de passe, pouvant être utilisé pour un accès ladite application distante 206₁-206ₙ, 212 ; et
- utiliser ladite donnée d'authentification pour obtenir l'accès ladite application distante 206₁-206ₙ, 212 auprès de l'appareil serveur concerné. Pour ce faire, l'unité d'authentification 220 peut, suivant un exemple de réalisation non limitatif, enrichir la requête d'accès émise par l'appareil utilisateur 202ᵢ avec ladite donnée d'authentification et transmettre ladite requête d'accès enrichie vers l'appareil serveur concerné.

Suivant un mode de réalisation, l'unité d'authentification 220 peut comprendre au moins une application logicielle exécutée sur un appareil dédié. Dans ce cas, ledit appareil dédié ne réalise pas d'autres fonctions que celle d'unité d'authentification.

Alternativement, l'unité d'authentification 220 peut comprendre au moins une application logicielle exécutée sur un appareil réalisant au moins une autre fonction. Par exemple, un tel appareil peut être un point d'accès au réseau de communication 208, qui peut être le réseau Internet.

L'unité d'authentification 220 peut communiquer avec les appareils utilisateur 202₁-202ₘ, de manière filaire ou sans fil.

L'unité d'authentification 220 peut communiquer avec les appareils serveur 204₁-204ₙ et 212, de manière filaire ou sans fil.

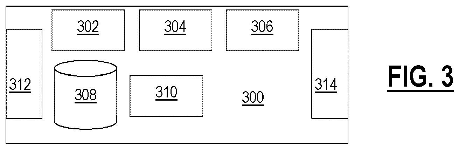

La FIGURE 3 est une représentation schématique d'un exemple de réalisation non limitatif d'une unité d'authentification pouvant être mise en œuvre dans la présente invention.

L'unité d'authentification 300, représentée sur la FIGURE 3, peut être mise en œuvre dans un procédé selon l'invention, tel que le procédé 100 de la

FIGURE 1, ou dans un système selon l'invention, tel que par exemple le système 200 de la FIGURE 2. En particulier, l'unité d'authentification 300 peut être l'unité d'authentification 220 de la FIGURE 2.

Dans l'exemple non limitatif représenté sur la FIGURE 3, l'unité d'authentification 300 comprend un module proxy 302 prévu pour analyser chaque requête d'accès reçue et déterminer si au moins une donnée d'authentification, préalablement mémorisée au niveau de ladite unité d'authentification 300, peut être utilisée pour ladite requête d'accès.

L'unité d'authentification 300 peut en outre comprendre au moins un des modules suivants :
- un module 304, dit d'administration, des utilisateurs permettant de créer, modifier et supprimer au moins un utilisateur ;.
- un module 306, dit de gestion, d'un compte utilisateur permettant à au moins un utilisateur d'administrer manuellement ses données authentifications, et éventuellement un profil utilisateur ;.
- un module 308 de mémorisation permettant d'assurer la persistance de l'ensemble des informations gérée par l'unité d'authentification 300 ;
- un module 310, dit de connexion, permettant à au moins un utilisateur de s'authentifier sur ladite unité d'authentification.

Chacun de ces modules peut être un module matériel ou un module logiciel. Bien que représentés séparément, au moins deux de ces modules peuvent être intégrés au sein d'un même module.

L'unité d'authentification 300 peut en outre comprendre une interface de communication 312, filaire ou sans fil, avec les appareils utilisateurs, et une interface de communication 314, filaire ou sans fil, avec les appareils serveur directement ou au travers d'un réseau de communication tel que le réseau 208 ou le réseau 214.

Bien entendu, l'invention n'est pas limitée aux exemples détaillés ci-dessus.

## Revendications

1. Procédé (100) d'accès d'un utilisateur, avec un appareil utilisateur (202₁-202ₘ), à une application (206₁-206ₙ ;212), dite distante, exécutée sur un appareil (204₁-204ₙ ;210), dit appareil serveur, distant dudit appareil utilisateur (202₁-202ₘ) et accessible au travers d'un réseau de communication (208,214), ledit procédé (100) comprenant au moins une itération d'une étape (104) de connexion comprenant les étapes suivantes :
▪ émission (106), par ledit appareil utilisateur (202₁-202ₘ), d'une requête d'accès à ladite application distante (206₁-206ₙ; 212) ;
▪ réception de ladite requête d'accès par une unité (220;300), dite d'authentification, disposée entre ledit appareil utilisateur (202₁-202ₘ) et ledit appareil serveur (204₁-204ₙ ;210) ;
▪ identification, par ladite unité d'authentification (220;300), d'au moins une donnée d'authentification préalablement mémorisée au niveau de ladite unité d'authentification (200;300) ; et
▪ authentification dudit utilisateur auprès de l'appareil serveur (204₁-204ₙ ;210) avec ladite au moins une donnée d'authentification.

2. Procédé (100) selon la revendication précédente, **caractérisé en ce qu'**il comprend, préalablement à la première étape de connexion (104), une étape (102), dite de mémorisation, au niveau de l'unité d'authentification (220;300), d'au moins une donnée d'authentification en association avec au moins une application distante (206₁-206ₙ; 212).

3. Procédé (100) selon l'une quelconque des revendications précédentes, **caractérisé en ce qu'**au moins une application (206₁-206ₙ; 212) est accessible au travers d'un navigateur Internet, la requête d'accès étant émise par ledit navigateur.

4. Procédé (100) selon l'une quelconque des revendications précédentes, **caractérisé en ce qu'**au moins requête d'accès comprend au moins un identifiant mémorisé au niveau de ladite unité d'authentification (220), et relatif à l'utilisateur, un profil utilisateur, ou un appareil utilisateur (202₁-202ₘ).

5. Procédé (100) selon l'une quelconque des revendications précédentes, **caractérisé en ce qu'**au moins requête d'accès comprend au moins donnée d'identification, mémorisée au niveau de ladite unité d'authentification (220), et relative à l'application distante (206₁-206ₙ; 212).

6. Système (200) d'accès d'un utilisateur à une application, dite distante, exécutée sur un appareil distant (204₁-204ₙ ;210), au travers d'un réseau de communication (208), ledit système (200) comprenant :
- au moins un appareil utilisateur (202₁-202ₘ) pour accéder à ladite application (206₁-206ₙ; 212) ;
- au moins un appareil (204₁-204ₙ ;210), dit serveur, exécutant ladite application (206₁-206ₙ; 212, distant dudit appareil utilisateur (202₁-202ₘ), et en communication avec ledit appareil utilisateur (202₁-202ₘ) au travers dudit réseau de communication (220) ;
- au moins une unité (220;300), dit d'authentification, disposée entre ledit appareil utilisateur (202₁-202ₘ) et ledit appareil serveur (204₁-204ₙ ;210) ;
configurés pour mettre en œuvre toutes les étapes du procédé (100) selon l'une quelconque des revendications précédentes.

7. Système (200) selon la revendication précédente, **caractérisé en ce que** l'unité d'authentification (220;300) comprend au moins une application logicielle exécutée sur :
- un appareil dédié, ou
- un appareil réalisant au moins une autre fonction.

8. Système (200) selon l'une quelconque des revendications 6 ou7, **caractérisé en ce que** l'unité d'authentification (300) comprend un module (302), dit module proxy, prévu pour analyser chaque requête d'accès reçue et déterminer si au moins une donnée d'identification peut être utilisée pour ladite requête.

9. Dispositif (220;300) d'authentification pour l'accès d'un utilisateur, avec un appareil utilisateur (202₁-202ₘ), à une application (206₁-206ₙ; 212, dite distante, exécutée sur un appareil (204₁-204ₙ ;210), dit appareil serveur, distant dudit appareil utilisateur (204₁-204ₙ ;210) et accessible au travers d'un réseau de communication (208), ledit dispositif d'authentification (220;300) étant prévu pour être disposé entre ledit appareil utilisateur (202₁-202ₘ) et ledit appareil serveur (204₁-204ₙ ;210), et configuré pour réaliser les étapes suivantes :
- réception (108) d'une requête d'accès à ladite application (206₁-206ₙ; 212) émise par ledit appareil utilisateur (202₁-202ₘ) ;
- identification d'au moins une donnée d'authentification préalablement mémorisée pour ledit accès ; et
- authentification dudit utilisateur auprès de l'appareil serveur (204₁-204ₙ ;210) pour obtenir l'accès à ladite application (206₁-206ₙ; 212).
